# EUROPEAN PATENT SPECIFICATION

(11) **EP 2 225 015 B1**
(45) Date of publication and mention of the grant of the patent: **19.12.2018**
(21) Application number: 08856492.7
(22) Date of filing: 06.11.2008
(51) Int. Cl.: B01J 8/00, B01J 8/18, B01J 19/24, B01D 45/14, B04C 5/13, B04C 9/00, C08F 6/00, C08F 10/00, C08F 2/00

(54) **METHOD AND APPARATUS FOR GAS-SOLID SEPARATION, APPLICATION TO POLYMERIZATION REACTIONS**
VERFAHREN UND VORRICHTUNG FÜR GAS-FESTSTOFF-TRENNUNG, ANWENDUNG AUF POLYMERISATIONSREAKTIONEN
PROCÉDÉ ET APPAREIL DE SÉPARATION GAZ-SOLIDE, APPLICATION À DES RÉACTIONS DE POLYMÉRISATION

(30) Priority: 06.12.2007 EP 07122544
(43) Date of publication of application: 08.09.2010
(73) Proprietor: Basell Poliolefine Italia S.r.l., 20121 Milano (IT)
(72) Inventor: RINALDI, Roberto, I-46100 Mantova (IT); PENZO, Giuseppe, I-46047 Montanara Di Curtatone (IT); MICHIELIN, Luciano, .. (IT)
(74) Representative: Colucci, Giuseppe
(86) International application number: PCT/EP2008/065054
(87) International publication number: WO 2009/071414

(56) References cited:
- EP-A- 0 286 160
- DE-A1- 1 507 799
- GB-A- 604 927
- US-A- 4 257 880
- US-A- 5 884 776
- US-A1- 2004 103 785
- US-A1- 2004 136 881
- US-A1- 2004 163 206
- US-A1- 2005 224 426

## Description

This invention relates to an apparatus for gas-solid separation and to a method to separate solid polymer particles from a mixed phase solids-gas stream in a process for the polymerisation of olefins. The invention relates also to a process for the polymerisation of olefins comprising a slurry polymerisation stage and optionally one or more polymerisation stages in the gas phase, wherein such method and apparatus for gas-solid separation are used to treat a mixed phase solids-gas stream between said slurry polymerisation stage and said optional polymerisation stages in the gas-phase.

Slurry polymerisation processes comprising one or more slurry polymerisation reactors in which olefin monomers are polymerised in a liquid medium have been known for many years. Such processes include processes to polymerise ethylene in slurry loop reactors in a liquid medium comprising an inert diluent such as isobutane. The polymer slurry discharged from the loop reactor is heated and transferred in one or more flash tanks to vaporise liquid medium comprising diluent and unreacted monomers from solid polymer particles. Each flash tank is typically associated to a cyclone which separates the entrained polymer solids from the vapours. The solid polymer particles collected at the bottom of the cyclone are eventually transferred to a dryer system.

Hybrid polymerisation processes comprising one or two slurry polymerisation reactors and one or more gas-phase reactors connected successively to each other to produce a variety of olefin polymers and/or copolymers have been known for years. In such processes polymer particles formed in the slurry polymerisation stage are first separated from the liquid phase then transferred to a successive gas-phase polymerisation stage. Typically the liquid phase is flashed away from the solid phase by de-pressurising and heating the polymer slurry. The resulting gas-solid mixture is then separated by centrifugal effect in a cyclone. The solid polymer particles collected at the bottom of the cyclone are transferred to a gas-phase reactor, and the gas stream collected at the top of the cyclone is cooled, compressed and recycled to the slurry polymerisation stage. Optionally, the polymer product resulting from the first gas-phase reactor is transferred to a second gas-phase reactor, where polymerisation is continued under different conditions.

In the case of polymerisation of propylene in liquid propylene, the PP/liquid propylene slurry is depressurised upon exiting the slurry polymerisation reactor, and is flashed at a pressure that allows for recycle of the vaporised monomer.

EP 1 080 116 B1 discloses a slurry process to polymerise ethylene in a slurry loop reactor in the presence of an inert liquid diluent. The polymerisation effluent is heated in a line heater, then transferred to a flash tank that separates vaporised liquid medium from solids. Vaporised liquid medium comprising diluent and unreacted monomers exits the flash tank and is passed to a separator such as a cyclone (paragraphs [0029] and [0030]). The vapour, after having a portion of the entrained catalyst and polymer solids removed, is passed to a heat exchanger system and is condensed. A portion of the entrained catalyst and polymer solids, however, is not removed by the cyclone. Such portion is generally smaller in size and may be referred to as "fines", "polymer fines" and/or "catalyst fines". These fines generally include unreacted and/or underreacted catalyst (paragraph [0035]).

The presence of fines in the gas or vapour stream exiting the cyclone, as reported in EP 1 080 116 B1, is undesirable due to build-up in the polymerisation equipment, which can cause reduced efficiency, impaired operability and equipment failure. The above problems make elimination or reduction of polymer fines important to commercial operation.

US 7,098,301 B1 discloses a method of separating unreacted monomer from a polymerisation process effluent stream containing solid fines. The method comprises passing the effluent stream through one or more bag filters disposed within a separation vessel. The bag filters prevent the solid fines from exiting the upper portion of the separation vessel. A purging system operating at a pressure above the operating pressure of the separation vessel is used to clean the bag filters and prevent plugging. In one embodiment, the purging system forces cleaning gas through the bag filters in a pulsing mode at intervals of about one to five minutes. The need of a purging system to clear the filters, however, is a drawback for it increases the operating costs.

EP 0 286 160 A1 discloses a rotational separator for separating particulate material from gas. GB 604 927 A discloses an air separator particularly adapted for cleansing of air in factories and workshop rooms.

US 2004/136881 A1 discloses an olefin polymerization process wherein a gas-solid separation is performed in a flash chamber or in a cyclone.

US 2005/224426 A1 discloses a device for a dynamic particle separator for separation of solid particles in a liquid or gas.

Therefore, the need is felt for a method and an apparatus for gas-solid separation that is able to separate fine polymer particles from a gaseous stream in a process for the polymerisation of olefins without significantly increasing the operating costs.

Also, the need is felt for a process for the polymerisation of olefins comprising a slurry polymerisation stage and optionally one or more polymerisation stages in the gas phase, wherein an efficient gas-solid separation is achieved between said slurry polymerisation stage and said optional polymerisation stages in the gas-phase.

Therefore the present invention relates to a method of separating particulate solids from a mixed phase solids-gas stream, characterised by directing said mixed phase solids-gas stream towards a rotating hollow body provided with a plurality of openings and a plurality of elements exposing a surface to said solids-gas stream during rotation of said hollow body, wherein a cylindrical baffle surrounds said rotating hollow body in a spaced-apart relationship, said baffle extends downwards with respect to said hollow body and defines a lower opening, whereby passage of said particulate solids from outside to internal side of said hollow body during rotation thereof is prevented or limited, and passage of a gas stream is effected through said openings, said gas stream being withdrawn from the internal side of said rotating hollow body, wherein said mixed phase solids-gas stream is a stream of an olefin polymerization process comprising unreacted monomers and polymer particles, wherein said hollow body has a cylindrical shape and is provided with a bottom plate, and wherein said elements are elongated rectangular blades, radially oriented, and extending vertically from said bottom plate to the top portion of said hollow body.

Another aspect of the invention relates to an apparatus in the form of a gas-solid separation chamber comprising a rotating hollow body provided with a plurality of openings and a plurality of elements exposing a surface during rotation to a solids-gas stream, which impacts against the outside of said hollow body, said rotating hollow body being connected to a driving shaft controlled by motor means, and a cylindrical baffle surrounding said rotating hollow body in a spaced-apart relationship, said baffle extending downwards with respect to said hollow body and defining a lower opening, wherein said hollow body has a cylindrical shape and is provided with a bottom plate, and wherein said elements are elongated rectangular blades, radially oriented, and extending vertically from said bottom plate to the top portion of said hollow body.

Another aspect of the invention relates to a process for the polymerisation of olefins comprising a slurry polymerisation stage, optionally one or more polymerisation stages in the gas phase, and a gas-solid separation stage between said slurry polymerisation stage and said optional polymerisation stages in the gas-phase, characterised in that said gas-solid separation stage is performed according to the method and the apparatus of present invention.

In the following of the description the invention is illustrated also by means of the attached drawings, in which:
Figure 1 is a simplified diagram representing an olefin polymerisation process according to an embodiment of the invention;
Figure 2 is a schematic view of an embodiment of the apparatus according to the invention;
Figure 3 is a schematic enlarged sectional view of part of the apparatus of Figure 2;

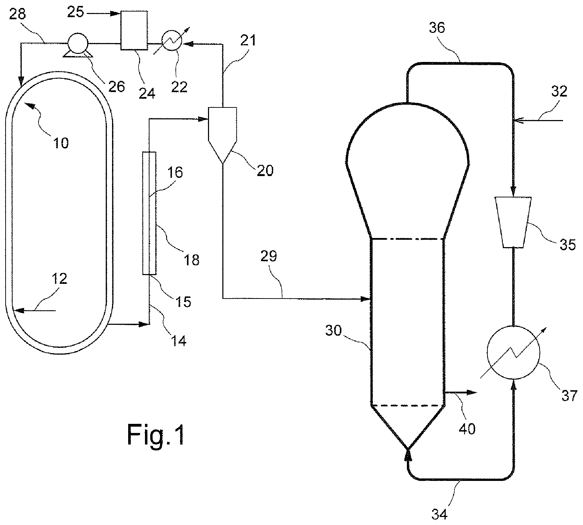

In the embodiment of Fig. 1, a slurry polymerisation is carried out in a jacketed loop reactor, designated with 10. Schematically, catalyst components, co-catalyst, and monomer such as propylene are introduced into the loop reactor as shown by arrow 12. In the case of use of a Ziegler/Natta catalyst comprising a solid component supported on active MgCl₂, the solid component can be fed as such or, preferably, in a pre-polymerised form.

Loop reactor 10 may be the first polymerisation reactor of the process, or there may be other polymerization reactor(s) upstream the reactor 10. For the purposes of the present description, reactor 10 can receive from line 12 a polymer produced in other reactor(s) or a prepolymer and/or a polymerisation catalyst or catalyst component. In the simplified drawing of Figure 1 the feeding lines for the catalyst, monomers, molecular weight regulator and other possible ingredients have been omitted, since they are known to the person skilled in the art.

If another slurry polymerisation reactor is used upstream reactor 10, arrow 12 designates the continuous feeding of the polymerisation slurry from such upstream reactor to loop reactor 10. A turbulent mixing of the slurry occurs in the loop reactor 10, which, combined with the high surface-to-volume ratio, results in a high heat removal capability and enables a high polyolefin output.

Most of the polymer slurry is continuously recirculated, but a fraction of it is continuously discharged to a transfer conduit generally designated with 14. Conduit 14 comprises a portion 16 equipped with heating means 18, for example a steam jacket surrounding portion 16. Upon discharge from reactor 10 the polymer slurry is depressurised, and during conveyance through portion 16 of conduit 14 the slurry is heated and brought to a temperature higher than the temperature within the loop reactor 10. Under these conditions the liquid monomers are evaporated and a turbulent three-phase flow is established comprising solid polymer, liquid monomers and gaseous monomers. An anti-fouling agent is preferably added to the polymerisation slurry at a point 15, downstream the discharge point from the loop reactor 10 and upstream the heated portion 16 of the transfer conduit 14. The highly turbulent regime established in portion 16 makes the incorporation of the anti-fouling agent in the polymer particles very effective.

The term "anti-fouling agent" as used in the present description means any substance that is capable to prevent, eliminate or substantially reduce the formation of build-up of polymer on any part of the polymerisation plant, including sheeting of walls of such apparatuses and any parts thereof, or deposits of polymer agglomerates on any such apparatuses and parts thereof.

Thus, the term "anti-fouling agent" includes antistatic substances capable of neutralizing the electrostatic charges of the polymer particles, and catalysts deactivators, including compounds that partially deactivate the aluminium alkyl co-catalyst, provided that they do not substantially inhibit the overall polymerisation activity.

A two-phase mixture comprising polymer particles and evaporated monomers is flashed in a separation chamber 20, where solid polymer is separated from vaporised monomer(s), as it will be described in detail in the following. In separation chamber 20 the particles of solid polymer fall by gravity towards the bottom, and the gas-phase exiting from the top is sent through line 21 to a monomer recovery section comprising a cooler 22, a monomer make-up unit 24 and a compressor 26. Make-up monomers supplied as shown by arrow 25 and the recycled monomers from the chamber 20 are fed through line 28 to loop polymerization reactor 10.

The polymer, by way of example a propylene homopolymer, discharged from the separation chamber 20 is transferred through line 29 to fluidised-bed gas-phase reactor 30, where a propylene copolymer, for example ethylene/propylene rubbery copolymer, is generated on the homopolymer particles. Schematically, fresh monomers 32 are fed to reactor 30 through line 34, unreacted monomers are recycled through line 36 equipped with a compressor 35 and a heat exchanger 37 placed downstream the compressor 35, and the heterophasic copolymer is discharged from line 40. Such product can be the end product of the polymerisation process, thus it is transferred to the finishing section of the plant, or can be transferred to a second gas-phase reactor (not shown) for enrichment in the copolymer fraction, as known in the field.

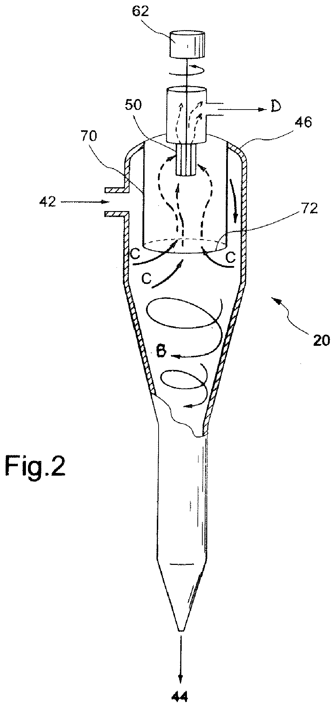

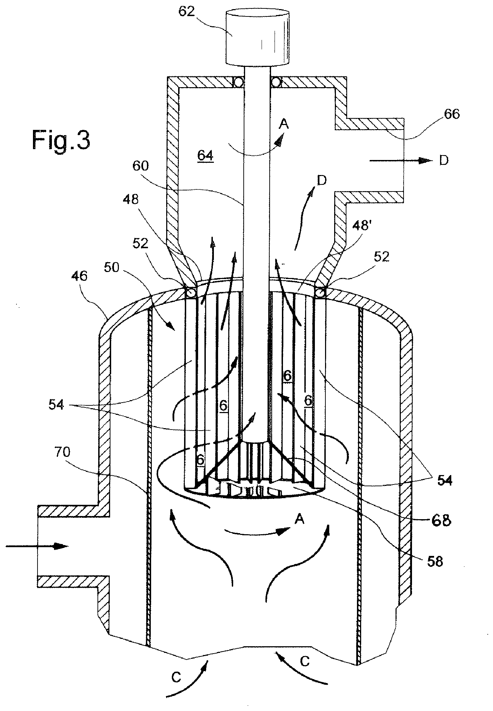

The separation method and the gas-solid separation chamber according to present invention are described in connection with Fig. 2 and Fig. 3. Such separation chamber 20 is provided with an inlet 42 for a mixed phase solids-gas stream in the upper region thereof, and an outlet 44 at the bottom to discharge a solid fraction separated from the mixed phase solids-gas. The lower region of chamber 20 has a reduced diameter and portions with steeply pitched walls to promote separation and deposition of solids. Thus in this embodiment chamber 20 is essentially a cyclone. The upper wall 46 of the separation chamber is provided with an opening 48 (Fig. 3) to discharge the gas fraction separated from the mixed phase gas-solids. The opening 48 is surrounded by a hollow body 50, which is rotary mounted to the top wall 46 of the chamber by means of bearings 52. Hollow body 50 has a cylindrical shape and comprises a plurality of spaced-apart elements 54 defining a plurality of openings 6. Fig. 3 is a schematic view of the hollow cylindrical body 50 in which only few elements 54 and openings 6 are shown. Hollow cylindrical body 50 is provided with a bottom plate 58 rigidly connected to a driving shaft 60 by means of supports 68. Driving shaft 60 is controlled by motor means 62, whereby body 50 is caused to rotate at a speed comprised between 800 and 2500 rpm, preferably between 1200 and 2000.

Elements 54 are elongated rectangular blades or paddles, radially oriented, as shown in Fig. 3, and extend vertically from bottom plate 58 to the top portion of hollow body 50, which is mounted via bearings 52 to the top wall 46 of the chamber 20. The top portion of hollow body 50 is provided with an opening 48', which coincides substantially with the opening 48 of chamber 20, through which an essentially solids-free gas phase exits the chamber.

According to another aspect of the invention, the gas-solid separation chamber comprises a cylindrical baffle 70 having the shape of a pipe, surrounding the rotating hollow body 50 and fixed to the upper wall 46 of the chamber. Baffle 70 extends downwards with respect to hollow body 50, and defines a lower inlet 72 at a level below the level of inlet 42 for the introduction of the gas-solid mixture in the upper region of the separation chamber.

The combination of cylindrical baffle 70 and rotating hollow body 50 within chamber 20 having the shape and function of a cyclone provides optimum separation of solid particles from a mixed phase solids-gas stream, including optimum separation of fine particles, as it is described in connection with Figs. 2 and 3.

The solid particles of the mixed phase solids-gas stream entering the separation chamber 20 via inlet 42, typically a tangential entry, are subject to centrifugal and gravity forces which cause them to settle at the bottom according to arrows B. The mixed phase solids-gas stream flows around the cylindrical baffle 70, which causes the stream to flow according to a tortuous path and promotes further separation of a solid fraction from the mixed phase. Then the gas-phase spirals upward and may entrain a certain amount of fine particles. The upward stream of gas and entrained fine particles enters the inlet 72, according to arrows C, and a portion of such stream hits the bottom plate 58 of the hollow rotating body 50, and is thereby still further deviated. This tortuous path causes a further separation of solid particles from the gas phase. The gas reaches then the cylindrical wall of body 50, which is made of a plurality of elements 54 with openings 6 between each pair of elements. The gas can enter the openings, but the rotation according to arrow A of the body 50, driven by shaft 60 and motor 62, causes the surface of elements 54 hit and reject the fine solid particles, while allowing gas penetration. This ensures an effective removal of fines from the gas-phase, which exits the hollow body via opening 48. The gas phase with a reduced content of solids or substantially solids-free flows through upper room 64 toward the exit duct 66, as shown by arrow D.

With respect to Fig. 2 and 3, inlet 42 may receive a two-phase gas/solid stream or a mixture still containing a certain amount of liquid. The separation chamber 20 is preferably operated at a pressure of from 12 to 24 bar, preferably from 16 to 20. The gas exiting the separation chamber 20 via duct 66 is brought into line 21 which transfers the gas phase to a monomer recovery section, as described above.

The method and apparatus of the invention allow to remove effectively and efficiently fine particles from the gas phase recycled to a monomer recovery section without increasing the size of the separation chamber and without significant operating costs. Differently from the use of filters within the separation chamber, the use of the rotating hollow body 50 according to the invention does not require cleaning, replacing or frequent maintenance.

The method and apparatus of the invention comprise the cylindrical baffle 70. Optimum operation is achieved with both baffle 70 and hollow rotating body 50 with the surface of elements 54 dynamically rejecting solid particles.

The separation method and the gas-solid separation chamber according to present invention can be successfully employed in a process for the polymerization of olefins.

It is therefore another object of present invention a process for the polymerisation of olefins comprising a sequence of a slurry polymerisation step, a heating step to evaporate the liquid polymerization medium, a gas-solid separation step, and optionally one or more downstream gas-phase polymerization steps, characterized in that said gas-solid separation stage comprises a gas-solid separation performed according to the method and apparatus described above.

The upstream polymerization step of present invention operates a liquid-phase polymerization of one or more olefins, so as to produce a polymer slurry. The liquid polymerization medium comprises one or more olefin monomers, hydrogen as molecular weight regulator and optionally an inert hydrocarbon as a polymerization diluent. The use of the liquid monomer as the polymerization medium allows to maximize the rate of the polymerization reaction by providing high monomer concentration, and to simplify the process by eliminating use of solvents or diluents that must be purified and recycled. Such polymerization may be carried out in a stirred tank with a jacketed wall to remove the heat of polymerization, or in a jacketed loop reactor, which provides a high ratio of cooling area to reactor volume.

The upstream polymerization reactor is preferably a loop reactor, which is operated at a pressure of from 22 to 50 bar, preferably from 30 to 45 bar. The polymerization temperature ranges from 60 to 90°C, preferably from 70 to 85°C.

As the polymerization catalyst, it is possible to use all known types of catalyst which are suitable for olefin polymerization. Particular mention may be made of Ziegler/Natta catalysts, chromium-based Phillips catalysts and single-site catalysts, in particular metallocene catalysts, without being restricted thereto.

Once discharged from the upstream reactor, the polyolefin slurry is depressurized and subjected to heating in a line provided with a steam jacketed pipe to a temperature such to evaporate the liquid polymerization medium. The effluent stream leaving the jacketed pipe is substantially a mixed phase solid-gas stream, which is fed to the gas-solid separation step: in particular, said stream is fed to the upper portion of a separation chamber to perform the separation method of present invention. Said separation chamber is provided with the rotating hollow body 50 mounted to its top wall, according to the embodiment described in connection with Figs. 2 and 3. Therefore, the separation stage in the polymerization process of the invention is performed in at least one separation chamber comprising a rotating hollow body placed within said separation chamber, in which the mixed-phase solids-gas stream undergoes a first separation of solids by centrifugal effect, the solids-gas stream with a reduced solids content resulting from said first separation being caused to flow towards said hollow rotating body to undergo a second separation of solids.

The inlet of the two-phase stream in the separation chamber is performed tangentially to the walls of the separation chamber, so as that a centrifugal effect favors the solid/gas separation inside the separation chamber. The polymer particles tend to fall downward due to gravity, while the vapor phase tends to flow upwards. The gaseous stream taken from the top of the separation chamber contains less than about 0.5 weight percent of fines, preferably less than about 0.1 weight percent of fines. Said gaseous stream is generally condensed using a heat exchanger and the condensed stream is recycled back to the upstream slurry reactor.

The lower portion of the separation chamber is preferably designed to facilitate the mass flow of the solid polymer particles including the solid fines. In one embodiment, the lower portion of the separation chamber is made from a polished metal surface having steeply pitched sides at an angle of between about 55° to about 90° from the horizontal, preferably between about 65° to about 90° from the horizontal Moreover, the lower portion of the separation chamber is preferably relatively small in diameter: a level detector is preferably installed in the lower portion of the separation chamber to allow for solids level control.

According to a preferred embodiment, the solid-gas separation step is performed in sequence of a high pressure separation chamber and a low pressure separation chamber, both containing the rotating hollow body placed within. The pressure within the high pressure separation chamber can range from 10 to 28 bar, preferably from 14 to 24 bar, while the low pressure separation chamber is operated at a pressure close to atmospheric one, in a range from 1.1 bar to 4.0 bar, preferably from 1.3 to 2.5 bar. As a consequence, the solid polymer discharged from the bottom of the high pressure separation chamber is fed with a tangential inlet at the upper portion of the low pressure separation chamber, where the separation of the solid from the gaseous phase is completed.

The polymer particles withdrawn from the gas-solid separation step may be optionally fed to a downstream gas-phase reactor to perform a multistage polymerization process. The optional downstream gas-phase reactors can be any type of gas-phase reactors, for example either gas-phase fluidized-bed reactors or a stirred bed reactors, wherein a bed of polymer is formed in the presence of a polymerization catalyst. Also gas-phase polymerization reactors having two distinct interconnected polymerization zones, as described in EP 782587 and EP 1012195, can be suitably used in the process of the invention. The preferred downstream gas-phase reactor is a fluidised bed reactor.

The olefin monomers polymerized by the process of the invention have formula CH₂=CHR, where R is hydrogen or a hydrocarbon radical having 1-12 carbon atoms. Examples of polyolefins that can be obtained are:
- high-density polyethylene (HDPE having a relative density higher than 0.940) including ethylene homopolymers and ethylene copolymers with α-olefins having 3 to 12 carbon atoms;
- linear polyethylene of low density (LLDPE having a relative density lower than 0.940) and of very low density and ultra low density (VLDPE and ULDPE having a relative density lower than 0.920 down to 0.880) consisting of ethylene copolymers with one or more α-olefins having 3 to 12 carbon atoms;
- elastomeric terpolymers of ethylene and propylene with minor proportions of diene or elastomeric copolymers of ethylene and propylene with a content of units derived from ethylene of between about 30 and 70% by weight;
- isotactic polypropylene and crystalline copolymers of propylene and ethylene and/or other α-olefins having a content of units derived from propylene of more than 85% by weight;
- isotactic copolymers of propylene and α-olefins, such as 1-butene, with an α-olefin content of up to 30% by weight;
- impact-resistant propylene polymers obtained by sequential polymerization of propylene and mixtures of propylene with ethylene containing up to 30% by weight of ethylene;
- atactic polypropylene and amorphous copolymers of propylene and ethylene and/or other α-olefins containing more than 70% by weight of units derived from propylene.

It is clear from the description above that other embodiments of the apparatus and process according to the invention are possible within the same inventive concept as defined in the appended claims.

## Claims

1. A method of separating particulate solids from a mixed phase solids-gas stream, **characterised by** directing said mixed phase solids-gas stream towards a rotating hollow body provided with a plurality of openings and a plurality of elements exposing a surface to said solids-gas stream, whereby passage of said particulate solids from outside to internal side of said hollow body during rotation thereof is prevented or limited, and passage of a gas stream is effected through said openings, said gas stream being withdrawn from the internal side of said rotating hollow body, wherein a cylindrical baffle surrounds said rotating hollow body in a spaced-apart relationship, said baffle extends downwards with respect to said hollow body and defines a lower opening, wherein said mixed phase solids-gas stream is a stream of an olefin polymerization process comprising unreacted monomers and polymer particles, wherein said hollow body has a cylindrical shape and is provided with a bottom plate, and wherein said elements are elongated rectangular blades, radially oriented, and extending vertically from said bottom plate to the top portion of said hollow body.

2. The method according to claim 1, **characterised in that** said hollow body rotates at a speed of between 800 and 2500 rpm.

3. The method according to claim 1, **characterised in that** said rotating hollow body is placed within a gas-solid separation chamber, in which said mixed-phase solids-gas stream undergoes a first separation of solids by centrifugal effect, the solids-gas stream with a reduced solids content resulting from said first separation being caused to flow towards said hollow rotating body to undergo a second separation of solids.

4. The method according to claim 3, **characterised in that** said gas-solid stream with a reduced solids content comes into contact with a bottom plate of said hollow rotating body, whereby further separation of solids is achieved.

5. A gas-solid separation chamber comprising:
- a rotating hollow body (50) provided with a plurality of openings (6) and a plurality of elements (54) exposing a surface during rotation to a solids-gas stream impacting against the outside of said hollow body, said rotating hollow body (50) being connected to a driving shaft (60) controlled by motor means (62); and
- a cylindrical baffle (70) surrounding said rotating hollow body (50) in a spaced-apart relationship, said baffle (70) extending downwards with respect to said hollow body (50) and defining a lower opening,
wherein said hollow body (50) has a cylindrical shape and is provided with aVbottom plate (58), and wherein said elements (54) are elongated rectangular blades, radially oriented, and extending vertically from said bottom plate (58) to the top portion of said hollow body (50).

6. The separation chamber according to claim 5 comprising an inlet (42) for a mixed phase solids-gas stream, an outlet (44) at the bottom thereof to discharge a solid fraction separated from said solids-gas stream, and an opening (48) to discharge a gas fraction separated from said solids-gas stream.

7. The separation chamber according to claim 5, **characterised in that** said rotating hollow body (50) is rotary mounted to the top wall (46) of said chamber by means of bearings (52).

8. The separation chamber according to claim 5, **characterised in that** said cylindrical baffle (70) is fixed to an upper wall (46), said baffle defining a lower inlet (72) for the passage of a solids-gas stream to the upper region of said separation chamber, and wherein said cylindrical baffle (70) extends at a level below the level of said inlet (42) for said solids-gas stream in said separation chamber.

9. A process for the polymerisation of olefins comprising a sequence of a slurry polymerisation step, a heating step to evaporate the liquid polymerization medium, a gas-solid separation step, and optionally one or more downstream gas-phase polymerization steps, **characterized in that** said gas-solid separation stage comprises a gas-solid separation performed according to the method of any of claims 1-4.

10. The process according to claim 9, wherein said heating step is performed in a steam jacketed pipe to obtain a mixed phase solid-gas stream to be fed to said gas-solid separation step.

11. The polymerization process according to claim 9, wherein said separation stage is performed in at least one separation chamber comprising a rotating hollow body placed within said separation chamber, in which the mixed-phase solids-gas stream undergoes a first separation of solids by centrifugal effect, the solids-gas stream with a reduced solids content resulting from said first separation being caused to flow towards said hollow rotating body to undergo a second separation of solids.

12. The process according to claim 9, wherein said separation stage is performed in sequence of a high pressure separation chamber and a low pressure separation chamber, both containing the rotating hollow body.

## Patentansprüche

1. Verfahren zum Trennen von partikelförmigen Feststoffen aus einem gemischtphasigen Feststoff-Gas-Strom, **dadurch gekennzeichnet, dass** der gemischtphasige Feststoff-Gas-Strom in Richtung eines rotierenden Hohlkörpers gelenkt wird, der mit einer Vielzahl von Öffnungen und einer Vielzahl von Elementen ausgestattet ist, die gegenüber dem Feststoff-Gas-Strom eine Oberfläche freilegen, womit Durchgang der partikelförmigen Feststoffe von der Außenseite zu der Innenseite des Hohlkörpers während dessen Rotation verhindert oder eingeschränkt wird und der Durchgang eines Gasstroms durch die Öffnungen bewirkt wird, wobei der Gasstrom von der Innenseite des rotierenden Hohlkörpers abgezogen wird, wobei ein zylindrischer Prallkörper den rotierenden Hohlkörper in einer beabstandeten Beziehung umgibt, wobei sich der Prallkörper in Bezug auf den Hohlkörper abwärts erstreckt und eine untere Öffnung definiert, wobei der gemischtphasige Feststoff-Gas-Strom ein Strom eines Olefinpolymerisationsprozesses ist, der nicht-umgesetzte Monomere und Polymerpartikel umfasst, wobei der Hohlkörper eine zylindrische Form aufweist und mit einer Bodenplatte ausgestattet ist, und wobei die Elemente längliche rechteckige Schaufeln sind, die radial orientiert sind und sich vertikal von der Bodenplatte zu dem oberen Abschnitt des Hohlkörpers erstrecken.

2. Verfahren nach Anspruch 1, **dadurch gekennzeichnet, dass** der Hohlkörper mit einer Drehzahl zwischen 800 und 2500 UpM rotiert.

3. Verfahren nach Anspruch 1, **dadurch gekennzeichnet, dass** der rotierende Hohlkörper in einer Gas-Feststoff-Trennkammer platziert wird, in der der gemischtphasige Feststoff-Gas-Strom eine erste Trennung der Feststoffe durch Zentrifugalwirkung durchläuft, wobei der aus der ersten Trennung resultierende Feststoff-Gas-Strom mit reduziertem Feststoffgehalt dazu gebracht wird, in Richtung des hohlen rotierenden Körpers zu fließen, um eine zweite Feststofftrennung zu durchlaufen.

4. Verfahren nach Anspruch 3, **dadurch gekennzeichnet, dass** der Gas-Feststoff-Strom mit einem reduzierten Feststoffgehalt in Kontakt mit einer Bodenplatte des hohlen rotierenden Körpers kommt, wodurch weitere Trennung der Feststoffe erreicht wird.

5. Gas-Feststoff-Trennkammer, umfassend:
- einen rotierenden Hohlkörper (50), der mit einer Vielzahl von Öffnungen (6) und einer Vielzahl von Elementen (54) ausgestattet ist, die während der Rotation gegenüber dem Feststoff-Gas-Strom, der auf die Außenseite des Hohlkörpers trifft, eine Oberfläche freilegen, wobei der rotierende Hohlkörper (50) mit einer Antriebswelle (60) verbunden ist, die durch Motormittel (62) gesteuert wird; und
- einen zylindrischen Prallkörper (70), der den rotierenden Hohlkörper (50) in einer beabstandeten Beziehung umgibt, wobei der Prallkörper (70) sich abwärts in Bezug auf den Hohlkörper (50) erstreckt und eine untere Öffnung definiert,
wobei der Hohlkörper (50) eine zylindrische Form hat und mit einer Bodenplatte (58) ausgestattet ist, und wobei die Elemente (54) längliche rechteckige Schaufeln sind, die radial orientiert sind und sich vertikal von der Bodenplatte (58) zu dem oberen Abschnitt des Hohlkörpers (50) erstrecken.

6. Trennkammer nach Anspruch 5, umfassend einen Einlass (42) für einen gemischtphasigen Feststoff-Gas-Strom, einen Auslass (44) an deren Boden, um eine aus dem Feststoff-Gas-Strom getrennte Feststofffraktion auszutragen, und eine Öffnung (48), um eine aus dem Feststoff-Gas-Strom getrennte Gasfraktion auszutragen.

7. Trennkammer nach Anspruch 5, **dadurch gekennzeichnet, dass** der rotierende Hohlkörper (50) an der oberen Wand (46) der Kammer mittels Lagern (52) drehbar montiert ist.

8. Trennkammer nach Anspruch 5, **dadurch gekennzeichnet, dass** der zylindrische Prallkörper (70) an einer oberen Wand (46) fixiert ist, wobei der Prallkörper einen unteren Einlass (72) zum Durchgang eines Feststoff-Gas-Stroms zu der oberen Region der Trennkammer definiert, und wobei der zylindrische Prallkörper (70) sich auf eine Höhe unterhalb der Höhe des Einlasses (42) für den Feststoff-Gas-Strom in der Trennkammer erstreckt.

9. Prozess zur Polymerisation von Olefinen, umfassend eine Abfolge von einem Suspensionspolymerisationsschritt, einem Heizschritt, um das flüssige Polymerisationsmedium zu verdampfen, einem Gas-Feststoff-Trennschritt und gegebenenfalls einem oder mehreren nachgeordneten Gasphasenpolymerisationsschritten, **dadurch gekennzeichnet, dass** der Gas-Feststoff-Trennschritt eine Gas-Feststoff-Trennung umfasst, die gemäß dem Verfahren nach einem der Ansprüche 1 bis 4 durchgeführt wird.

10. Prozess nach Anspruch 9, wobei der Heizschritt in einer dampfummantelten Leitung durchgeführt wird, um einen gemischtphasigen Feststoff-Gas-Strom zu erhalten, der in den Gas-Feststoff-Trennschritt einzuspeisen ist.

11. Polymerisationsprozess nach Anspruch 9, wobei die Trennstufe in mindestens einer Trennkammer durchgeführt wird, die einen rotierenden Hohlkörper umfasst, der in der Trennkammer platziert wird, in der der gemischtphasige Feststoff-Gas-Strom eine erste Trennung der Feststoffe durch Zentrifugalwirkung durchläuft, wobei der aus der ersten Trennung resultierende Feststoff-Gas-Strom mit reduziertem Feststoffgehalt dazu gebracht wird, zu dem hohlen rotierenden Körper zu fließen, um eine zweite Feststofftrennung zu durchlaufen.

12. Prozess nach Anspruch 9, wobei die Trennstufe in einer Folge einer Hochdrucktrennkammer und einer Niederdrucktrennkammer in durchgeführt wird, wobei beide den rotierenden Hohlkörper enthalten.

## Revendications

1. Procédé de séparation de matières solides particulaires d'un courant en phase mixte de gaz-matières solides, **caractérisé en ce qu'**il dirige ledit courant en phase mixte de gaz-matières solides vers un corps creux rotatif pourvu d'une pluralité d'ouvertures et d'une pluralité d'éléments exposant une surface audit courant de gaz-matières solides, le passage desdites matières solides particulaires de l'extérieur vers le côté interne dudit corps creux pendant la rotation de celui-ci étant empêché ou limité, et le passage d'un courant gazeux étant effectué à travers lesdites ouvertures, ledit courant de gaz étant retiré du côté interne dudit corps creux rotatif, un déflecteur cylindrique entourant ledit corps creux rotatif dans une relation espacée, ledit déflecteur s'étendant vers le bas par rapport audit corps creux et définissant une ouverture inférieure, ledit courant en phase mixte de gaz-matières solides étant un courant d'un procédé de polymérisation d'oléfines comprenant des particules de polymère et des monomères n'ayant pas réagi, ledit corps creux ayant une forme cylindrique et étant pourvu d'une plaque inférieure, et lesdits éléments étant des lames rectangulaires allongées, orientées radialement, et s'étendant verticalement de ladite plaque inférieure la partie supérieure dudit corps creux.

2. Procédé selon la revendication 1, **caractérisé en ce que** ledit corps creux tourne à une vitesse comprise entre 800 et 2 500 tr/min.

3. Procédé selon la revendication 1, **caractérisé en ce que** ledit corps creux rotatif est placé à l'intérieur d'une chambre de séparation gaz-solide, dans laquelle ledit courant en phase mixte de gaz-matières solides subit une première séparation de matières solides par effet centrifuge, le courant de gaz-matières solides ayant une teneur réduite en matières solides résultant du fait que ladite première séparation est amenée à s'écouler vers ledit corps rotatif creux pour subir une seconde séparation de matières solides.

4. Procédé selon la revendication 3, **caractérisé en ce que** ledit courant de gaz-matières solides à teneur réduite en matières solides vient en contact avec une plaque inférieure dudit corps rotatif creux, une séparation supplémentaire des matières solides étant obtenue.

5. Chambre de séparation gaz-solide comprenant :
- un corps creux rotatif (50) pourvu d'une pluralité d'ouvertures (6) et d'une pluralité d'éléments (54) exposant une surface pendant la rotation à un courant de gaz-matières solides ayant un impact contre l'extérieur dudit corps creux, ledit corps creux rotatif (50) étant relié à un arbre d'entraînement (60) commandé par des moyens moteurs (62) ; et
- un déflecteur cylindrique (70) entourant ledit corps creux rotatif (50) dans une relation espacée, ledit déflecteur (70) s'étendant vers le bas par rapport audit corps creux (50) et définissant une ouverture inférieure,
ledit corps creux (50) ayant une forme cylindrique et étant pourvu d'une plaque inférieure (58), et lesdits éléments (54) étant des lames rectangulaires allongées, orientées radialement, et s'étendant verticalement de ladite plaque inférieure (58) à la partie supérieure dudit corps creux (50).

6. Chambre de séparation selon la revendication 5 comprenant une entrée (42) pour un courant en phase mixte de gaz-matières solides, une sortie (44) au niveau de la partie inférieure de celui-ci pour décharger une fraction solide séparée dudit courant de gaz-matières solides, et une ouverture (48) pour décharger une fraction gazeuse séparée dudit courant de gaz-matières solides.

7. Chambre de séparation selon la revendication 5, **caractérisée en ce que** ledit corps creux rotatif (50) est monté rotatif sur la paroi supérieure (46) de ladite chambre au moyen de paliers (52).

8. Chambre de séparation selon la revendication 5, **caractérisée en ce que** ledit déflecteur cylindrique (70) est fixé à une paroi supérieure (46), ledit déflecteur définissant une entrée inférieure (72) pour le passage d'un courant de gaz-matières solides vers la région supérieure de ladite chambre de séparation, et ledit déflecteur cylindrique (70) s'étendant à un niveau en dessous du niveau de ladite entrée (42) pour ledit courant de gaz-matières solides dans ladite chambre de séparation.

9. Procédé pour la polymérisation d'oléfines comprenant une séquence d'une étape de polymérisation en suspension, une étape de chauffage pour évaporer le milieu de polymérisation liquide, une étape de séparation gaz-solide, et éventuellement une ou plusieurs étapes de polymérisation en phase gazeuse en aval, **caractérisé en ce que** ladite étape de séparation gaz-solide comprend une séparation gaz-matières solides réalisée selon le procédé de l'une quelconque des revendications 1 à 4.

10. Procédé selon la revendication 9, dans lequel ladite étape de chauffage est réalisée dans un tuyau chemisé à vapeur pour obtenir un courant en phase mixte de gaz-matières solides devant être introduit dans ladite étape de séparation gaz-solide.

11. Procédé de polymérisation selon la revendication 9, dans lequel ladite étape de séparation est réalisée dans au moins une chambre de séparation comprenant un corps creux rotatif placé à l'intérieur de ladite chambre de séparation, dans lequel le courant en phase mixte de gaz-matières solides subit une première séparation de matières solides par effet centrifuge, le courant de gaz-matières solides ayant une teneur en réduite matières solides du fait que ladite première séparation est amenée à s'écouler vers ledit corps rotatif creux pour subir une seconde séparation de matières solides.

12. Procédé selon la revendication 9, dans lequel ladite étape de séparation est réalisée en séquence d'une chambre de séparation haute pression et d'une chambre de séparation basse pression, les deux contenant le corps creux rotatif.
